# EUROPÄISCHE PATENTSCHRIFT

(11) **EP 1 913 677 B1**
(45) Veröffentlichungstag und Bekanntmachung des Hinweises auf die Patenterteilung: **15.08.2012**
(21) Anmeldenummer: 06763622.5
(22) Anmeldetag: 09.06.2006
(51) Int. Cl.: H01R 39/32, H02K 13/04

(54) **HANDWERKZEUGMASCHINE**
PORTABLE POWER TOOL
MACHINE-OUTIL A MAIN

(30) Priorität: 01.08.2005 DE 102005036035
(43) Veröffentlichungstag der Anmeldung: 23.04.2008
(73) Patentinhaber: ROBERT BOSCH GMBH, 70442 Stuttgart (DE)
(72) Erfinder: RIEKER, Werner, 71111 Waldenbuch (DE); SCHOEN, Ludwig, 71640 Ludwigsburg (DE)
(86) Internationale Anmeldenummer: PCT/EP2006/063056
(87) Internationale Veröffentlichungsnummer: WO 2007/014794

(56) Entgegenhaltungen:
- DE-A1- 4 026 025
- GB-A- 2 223 888
- US-A- 4 757 602
- US-A- 5 679 996

## Beschreibung

### Stand der Technik

Die Erfindung geht insbesondere aus von einer Elektromotorkommutierungsvorrichtung nach dem Oberbegriff des Anspruchs 1.

Es ist bereits eine Elektromotorkommutierungsvorrichtung zur Polumschaltung einer Wicklung bei einem Elektromotor vorgeschlagen worden. Bei einer Montage des Elektromotors werden elektrische Leiter der Wicklung in schlitzförmige Ausnehmungen der Elektromotorkommutierungsvorrichtung eingelegt. Zur Herstellung einer elektrischen Verbindung zwischen den elektrischen Leitern und der Elektromotorkommutierungsvorrichtung werden die elektrischen Leiter durch ein Schweißen an der E-lektromotorkommutierungsvorrichtung befestigt.

Aus der DE 40 26 025 A1 ist eine Elektromotorkommutierungsvorrichrung nach dem Oberbegriff des Anspruchs 1 bekannt.

### Vorteile der Erfindung

Die Erfindung geht insbesondere aus von einer Elektromotorkommutierungsvorrichtung zur Polumschaltung einer Ankereinheit mit einer Stromwendeeinheit und schlägt eine Vorrichtung nach dem Anspruch 1 vor.

Es wird vorgeschlagen, dass die Stromwendeeinheit dazu vorgesehen ist, eine elektrische Verbindung mit der Ankereinheit durch eine Fügebewegung herzustellen. Unter einer "Fügebewegung" soll in diesem Zusammenhang insbesondere eine Bewegung der Stromwendeeinheit relativ zur Ankereinheit verstanden werden, bei der die Stromwendeeinheit und die Ankereinheit oder die Stromwendeeinheit und eine mit der Ankereinheit verbundene weitere Einheit zusammengefügt werden. Diese Bewegung ist vorzugsweise als translatorische Bewegung der Stromwendeeinheit relativ zur Ankereinheit ausgeführt, wobei eine Drehbewegung, wie z.B. eine Schraubbewegung, jedoch zusätzlich oder alternativ denkbar ist. Außerdem soll unter "vorgesehen" insbesondere speziell "ausgestattet" und/oder "ausgelegt" verstanden werden. Durch eine erfindungsgemäße Ausgestaltung kann ein geringer Aufwand bei der Herstellung einer elektrischen Verbindung zwischen der Ankereinheit und der Elektromotorkommutierungsvorrichtung erreicht werden. Besonders vorteilhaft kann die elektrische Verbindung mittels eines kalten Verfahrens hergestellt werden, wobei eine Wärmeenergiezufuhr, die z.B. durch ein Schweißen von elektrischen Leitern der Ankereinheit bedingt ist, und damit verbundene Kosten und mögliche Beschädigungen der Stromwendeeinheit und/oder der Ankereinheit vermieden werden können. Des Weiteren kann ein Trennen der Stromwendeeinheit von der Ankereinheit oder von einer mit der Ankereinheit verbundenen Einheit durchgeführt werden, ohne dass das Kontaktierelement und/oder elektrische Leiter der Ankereinheit bei einem Lösen der elektrischen Verbindung beschädigt werden. Dadurch kann z.B. bei einem Defekt der Stromwendeeinheit die Stromwendeeinheit einfach ausgetauscht werden, wobei die Ankereinheit in Kombination mit einer weiteren betriebsfähigen Stromwendeeinheit weiter benutzt werden kann. Ferner können Stromwendeeinheiten unterschiedlicher Bauarten, z.B. Bandkommutatoren, einzelsegmentierte, ringarmierte, nicht ringarmierte Kommutatoren usw., flexibel eingesetzt werden, da die Kontaktierart im Wesentlichen unabhängig von einer Bauart der Stromwendeeinheit ist.

Vorteilhafterweise umfasst die Elektromotorkommutierungsvorrichtung eine von der Stromwendeeinheit separierbare Leiteraufnahmeeinheit, die zur Aufnahme elektrischer Leiter der Ankereinheit vorgesehen ist. Es kann ein Herstellen der elektrischen Verbindung vereinfacht werden, indem die elektrischen Leiter in der Leiteraufnahmeeinheit gezielt zu einem einfachen Kontaktieren mit z.B. Kontaktierelementen der Stromwendeeinheit ausgelegt werden. Außerdem kann diese elektrische Verbindung von einer Auslegung elektrischer Leiter innerhalb der Ankereinheit unabhängig hergestellt werden. Die Leiteraufnahmeeinheit kann mit der Ankereinheit formschlüssig, stoffschlüssig und/oder besonders vorteilhaft kraftschlüssig verbunden sein. Die Leiteraufnahmeeinheit kann dabei als separates Funktionsteil oder mit zumindest einem weiteren Funktionsteil zumindest teilweise einstückig ausgeführt sein, beispielsweise kann die Leiteraufnahmeeinheit einstückig mit einem die Ankereinheit von einer Ankerwelle elektrisch isolierenden Isoliermittel ausgeführt sein, wodurch eine Bauteileanzahl, der Montageaufwand und die Kosten reduziert werden können.

Es kann eine besonders einfache Montage dadurch erreicht werden, dass die Stromwendeeinheit zumindest ein Kontaktierelement aufweist, das dazu vorgesehen ist, eine elektrische Verbindung durch ein Stecken der Stromwendeeinheit herzustellen. Dabei kann die elektrische Verbindung durch eine translatorische Bewegung der Stromwendeeinheit relativ zur Ankereinheit einfach hergestellt werden, wie z.B. durch ein Aufstecken der Stromwendeeinheit auf die Ankereinheit oder auf die Leiteraufnahmeeinheit und/oder durch ein Einstecken der Stromwendeeinheit in die Ankereinheit oder in die Leiteraufnahmeeinheit.

Eine sichere elektrische Verbindung kann bei der Fügebewegung dadurch besonders einfach hergestellt werden, dass das Kontaktierelement einen zahnförmigen Abschnitt aufweist. Bei dieser Fügebewegung kann das Kontaktierelement durch das zahnförmige Profil beispielsweise eine Lackisolation von einem elektrischen Leiter der Ankereinheit abschaben und dabei einen sicheren elektrischen Kontakt mit dem elektrischen Leiter herstellen. Der zahnförmige Abschnitt kann zusätzlich dazu speziell ausgestaltet sein, dass bei der Fügebewegung eine formschlüssige Verbindung zwischen dem Kontaktierelement und einem elektrischen Leiter entsteht, wodurch eine zusätzliche Sicherheit der elektrischen Verbindung erzielt werden kann. Alternativ oder zusätzlich zu einem zahnförmigen Abschnitt sind jedoch auch weitere, dem Fachmann als sinnvoll erscheinende scharfkantige Abschnitte denkbar.

Vorteilhafterweise ist das Kontaktierelement dazu vorgesehen, bei der Fügebewegung elastisch verformt zu werden. Es kann durch das elastische Verformen eine Rückstellkraft erzielt werden, wodurch eine vorteilhafte kraftschlüssige Verbindung zwischen der Ankereinheit und dem Kontaktierelement oder zwischen der Leiteraufnahmeeinheit und dem Kontaktierelement hergestellt werden kann. Dadurch können ein sicheres Halten der Stromwendeeinheit sowie eine sichere elektrische Verbindung erzielt werden. Zusätzlich können vorteilhaft elektrische Leiter der Ankereinheit, die möglicherweise unterschiedliche Durchmesser aufweisen, unabhängig von dem jeweiligen Durchmesser kontaktiert werden.

Weist das Kontaktierelement zumindest einen lamellenförmigen Fortsatz auf, können vorteilhafte Hebelarme und große Auslenkbewegungen realisiert werden.

In einer weiteren Ausführungsform der Erfindung wird vorgeschlagen, dass die Elektromotorkommutierungsvorrichtung ein Schutzmittel aufweist, das bei einer hergestellten elektrischen Verbindung auf dem lamellenförmigen Fortsatz angeordnet ist. Dadurch kann ein vorteilhaftes Sichern des lamellenförmigen Fortsatzes in einer Kontaktstellung erreicht werden, was sich insbesondere bei dem Einsatz der Elektromotorkommutierungsvorrichtung bei hoch beanspruchbaren Elektromotoren eignet.

Ist das Kontaktierelement durch einen Stanzvorgang ausgeformt, kann ein kostengünstiger Herstellungsprozess des Kontaktierelements erreicht werden. Zusätzlich sind jedoch auch andere formgebende Vorgänge denkbar.

Vorteilhafterweise ist die Leiteraufnahmeeinheit von einem ringförmigen Element gebildet, das eine Umfangsseite aufweist, welche Vertiefungen zum Einlegen der elektrischen Leiter umfasst. Es kann bei der Herstellung der elektrischen Verbindung, z.B. durch ein Eingreifen von Kontaktierelementen in die Vertiefungen, ein sicheres Halten der in den Vertiefungen eingelegten elektrischen Leiter erreicht werden. Die Vertiefungen können zusätzlich eine vorteilhafte Sicherheit gegen ein Verdrehen von Kontaktierelementen bei einer gemeinsamen Drehung der Stromwendeeinheit und der Leiteraufnahmeeinheit bieten.

Vorzugsweise sind bei einer hergestellten elektrischen Verbindung die Stromwendeeinheit und die Leiteraufnahmeeinheit über eine Pressverbindung verbunden. Hierdurch können ein sicheres, insbesondere spielfreies Halten der Stromwendeeinheit und eine sichere elektrische Verbindung einfach erreicht werden, wobei eine Verwendung von zusätzlichen Befestigungsmitteln und ein entsprechender Aufwand vermieden werden können.

In diesem Zusammenhang lässt sich eine sichere kraftschlüssige Verbindung zwischen der Leiteraufnahmeeinheit und der Stromwendeeinheit einfach dadurch erreichen, dass die Leiteraufnahmeeinheit eine konische Umfangsseite aufweist. Dies eignet sich insbesondere bei dem Einsatz einer Stromwendeeinheit, die elastisch verformbare, z.B. mit lamellenförmigen Fortsätzen versehene Kontaktierelemente aufweist. Es können Unsicherheiten bei einem Herstellen von elektrischen Kontakten der Kontaktierelemente vermindert werden, indem Toleranzen ausgeglichen werden können. Alternativ oder zusätzlich zu einem Konus an der Leiteraufnahmeeinheit kann ein Konus an der Ankereinheit und/oder an der Stromwendeeinheit angeordnet sein.

Es können durch den Einsatz einer erfindungsgemäßen Elektromotorkommmutierungsvorrichtung bei Elektrogeräten kompakte, kostengünstige sowie einfach montierbare Elektrogeräte, insbesondere Handwerkzeugmaschinen, vorteilhaft erreicht werden.

Ferner wird ein Verfahren nach dem Anspruch 10 zur Herstellung einer elektrischen Verbindung zwischen einer Elektromotorkommutierungsvorrichtung und einer Ankereinheit vorgeschlagen, bei dem die Ankereinheit mit elektrischen Drähten bewickelt und nachfolgend durch eine Fügebewegung eine elektrische Verbindung zwischen der Ankereinheit und einer Stromwendeeinheit der Elektromotorkommutierungsvorrichtung hergestellt wird. Durch dieses Verfahren kann ein geringer Herstellaufwand erreicht werden, da ein elektrischer Kontakt der Stromwendeeinheit mit allen in der Leiteraufnahmeeinheit aufgenommenen elektrischen Drähten der Ankereinheit in einem Schritt durch eine Fügebewegung hergestellt werden kann. Es kann zusätzlich eine vorteilhafte Austauschbarkeit der Stromwendeeinheit relativ zu einer bewickelten Ankereinheit erreicht werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: einen Elektromotor mit einer Ankereinheit und einer Elektromotorkommutierungsvorrichtung in einer Seitenansicht,
- Fig. 2: einen Kontaktbereich zwischen der Elektromotorkommutierungsvorrichtung und der Ankereinheit in einer Schnittansicht,
- Fig. 3: eine Leiteraufnahmeeinheit der Elektromotorkommutierungsvorrichtung in einer Draufsicht,
- Fig. 4: die Leiteraufnahmeeinheit in einer Seitenansicht,
- Fig. 5: den Kontaktbereich zwischen der Elektromotorkommutierungsvorrichtung und der Ankereinheit in einer Seitenansicht,
- Fig. 6: die Leiteraufnahmeeinheit und ein Schutzmittel und
- Fig. 7: eine alternative Leiteraufnahmeeinheit und eine in die Leiteraufnahmeeinheit einsteckbare Stromwendeeinheit.

### Beschreibung der Ausführungsbeispiele

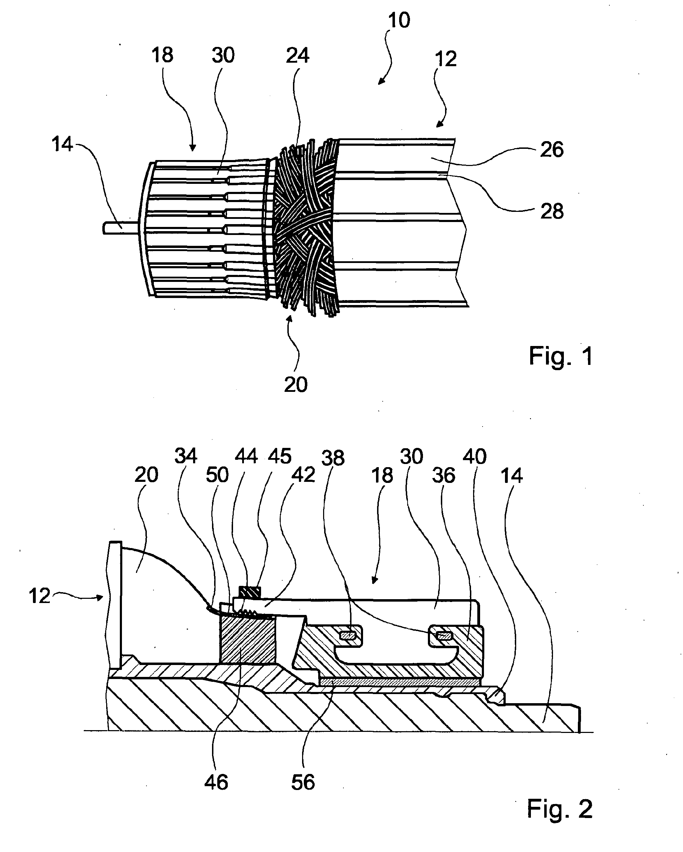

Figur 1 zeigt einen Elektromotor 10 mit einer Ankereinheit 12, einer Ankerwelle 14 und einer Elektromotorkommutierungsvorrichtung, welche eine von einem Kommutator ausgebildete Stromwendeeinheit 18 aufweist. Von der Ankereinheit 12 sind ein Wicklungskopf 20, elektrische Drähte 24, die auf dem Wicklungskopf 20 angeordnet sind, sowie Eisenkerne 26 und Wicklungsnuten 28 zu erkennen. Die Stromwendeeinheit 18 weist in Umfangsrichtung mehrere, hintereinander angeordnete elektrisch leitende Kontaktierelemente 30 auf, die sich in Längsrichtung der Ankerwelle 14 verjüngen. Die Kontaktierelemente 30 sind jeweils mit einem elektrischen Leiter 34 (Figur 2) eines elektrischen Drahts 24 der Ankereinheit 12 elektrisch verbunden. Bei einem Betrieb des Elektromotors 10 sind in der Figur nicht dargestellte, relativ zur Stromwendeeinheit 18 drehfest gelagerte Kohlebürsten abwechselnd in elektrischem Kontakt mit den Kontaktierelementen 30, wobei Polumschaltungen der Ankereinheit 12 stattfinden.

Ein Kontaktbereich zwischen der Stromwendeeinheit 18 und der Ankereinheit 12 des Elektromotors 10 ist in einer Schnittansicht in Figur 2 schematisch dargestellt. Zu erkennen sind die Ankerwelle 14, der Wicklungskopf 20 der Ankereinheit 12 und ein Kontaktierelement 30 der Stromwendeeinheit 18. Der Anschaulichkeit halber sind die auf dem Wicklungskopf 20 angeordneten elektrischen Drähte 24 nicht dargestellt. Die Stromwendeeinheit 18 weist ferner ein Trägerelement 36 aus Kunststoff zum Abstützen der Kontaktierelemente 30 auf, das um die Kontaktierelemente 30 umspritzt ist. Zur Stabilisierung der Kontaktierelemente 30 sind zusätzlich in dem Trägerelement 36 eingebettete metallische Armierungsringe 38 vorgesehen. Alternativ und/oder zusätzlich könnten auch Trägerelemente aus einem Isoliermaterial eingebracht sein, wie z.B. aus Glasfaser, oder es könnte auch auf Trägerelemente verzichtet werden. Um die Ankerwelle 14 von der Ankereinheit 12 und der Stromwendeeinheit 18 elektrisch zu isolieren, ist der Elektromotor 10 mit einem Isoliermittel 40 aus Kunststoff versehen, das ringförmig an der Ankerwelle 14 anliegt.

Bei der Herstellung eines Kontaktierelements 30 wird in einem ersten Schritt ein Leiterdraht, z.B. ein Kupferdraht, mittels eines Ziehens durch Ziehsteine abgeflacht. Aus diesem abgeflachten Draht wird das Kontaktierelement 30 durch einen Stanzvorgang ausgeformt. Die dadurch ausgeformten Kontaktierelemente 30 weisen jeweils einen lamellenförmigen Fortsatz 42 auf, wobei ein zahnförmiger Abschnitt 44 an einer Unterseite des Fortsatzes 42 bei dem Stanzvorgang angestanzt wird.

Zum Schützen der lamellenförmigen Fortsätze 42 bzw. zum Sichern derselben in ihrer Kontaktstellung ist in Umfangsrichtung der Stromwendeeinheit 18 zusätzlich ein als ein Glasroving ausgebildetes Schutzmittel 45 auf den lamellenförmigen Fortsätzen 42 angeordnet, was insbesondere bei einem Betrieb des Elektromotors 10 mit hoher Drehzahl und/oder bei anspruchsvollen Anwendungen des Elektromotors 10 vorteilhaft ist. In einer Ausführungsvariante, in welcher der Elektromotor 10 bei einer Anwendung mittel oder wenig belastet wird, kann auf das Schutzmittel 45 verzichtet werden.

Zur Aufnahme von elektrischen Leitern 34 der Ankereinheit 12 ist die Elektromotorkommutierungsvorrichtung mit einer Leiteraufnahmeeinheit 46 versehen. Diese ist von einem ringförmigen Element aus Kunststoff gebildet und ist im montierten Zustand des Elektromotors 10 auf dem Wicklungskopf 20 der Ankereinheit 12 aufgepresst angeordnet.

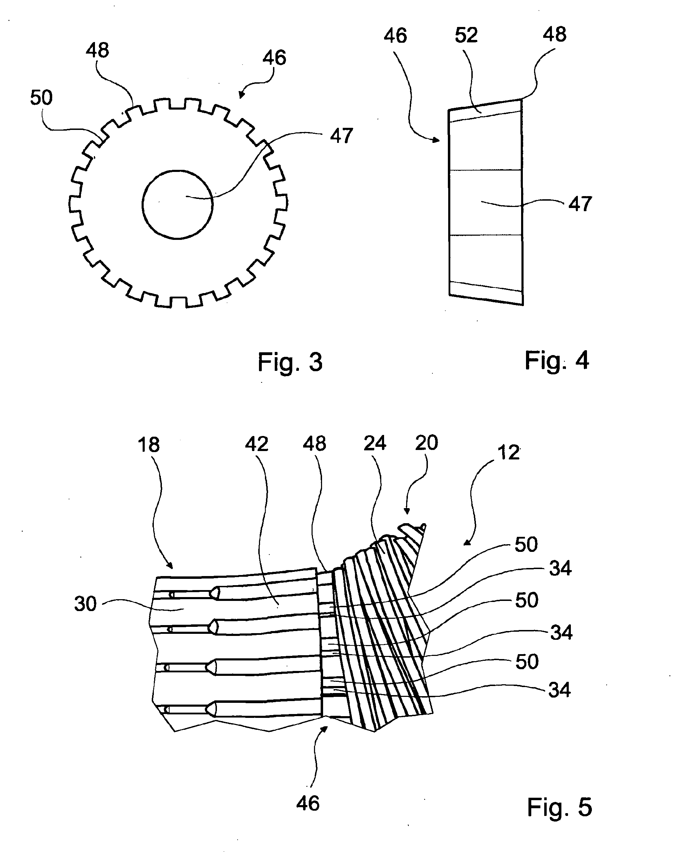

Die Leiteraufnahmeeinheit 46 ist in den Figuren 3 und 4 näher dargestellt. Wie in Figur 3 zu erkennen ist, weist die Leiteraufnahmeeinheit 46 eine Ausnehmung 47 zur Durchführung der Ankerwelle 14 und des Isoliermittels 40 sowie eine Umfangsseite 48 auf, welche in Längsrichtung verlaufende, nutenförmige Vertiefungen 50 zum Einlegen der elektrischen Leiter 34 umfasst, wobei die Anzahl und die Auslegung der Vertiefungen 50 der Anzahl bzw. der Auslegung der lamellenförmigen Fortsätze 42 der Stromwendeeinheit 18 entsprechen. Wie in einer Seitenansicht in Figur 4 angedeutet, weist die Umfangsseite 48 der Leiteraufnahmeeinheit 46 eine konische Form auf, wodurch diese schräg zur Längsrichtung der Ankerwelle 14 ausgerichtet ist. Die gestrichelten Linien stellen Böden 52 der Vertiefungen 50 dar bzw. deuten die zur Durchführung der Ankerwelle 14 vorgesehene Ausnehmung 47 an.

Die Montage des Elektromotors 10 wird anhand von Figur 2 näher beschrieben. In einem ersten Schritt wird bei einer von der Ankerwelle 14 getrennten Stromwendeeinheit 18 die Ankereinheit 12 mit den elektrischen Drähten 24 bewickelt. Anschließend wird die Leiteraufnahmeeinheit 46 auf die Ankerwelle 14 und das Isoliermittel 40 geführt und auf den Wicklungskopf 20 aufgepresst. Drahtenden der elektrischen Drähte 24 werden dann jeweils in eine der Vertiefungen 50 der Leiteraufnahmeeinheit 46 eingelegt. In einer Ausführungsvariante können zusätzlich die Drahtenden jeweils durch eine Öffnung in eine der Vertiefungen 50 durchgeschleift werden. Die Drahtenden sind jeweils von einem elektrischen Leiter 34 gebildet, der von einem Isolationslack beschichtet ist. In einem letzten Schritt wird die Stromwendeeinheit 18 ebenfalls auf die Ankerwelle 14 und das Isoliermittel 40 geführt und auf die Leiteraufnahmeeinheit 46 aufgesteckt bzw. aufgepresst. Bei dieser Fügebewegung der Stromwendeeinheit 18 greifen die lamellenförmigen Fortsätze 42 jeweils in eine der Vertiefungen 50 ein und schaben durch den zahnförmigen Abschnitt 44 den Isolationslack ab, wodurch eine elektrische Verbindung zwischen dem elektrischen Leiter 34 der Ankereinheit 12 und dem Kontaktierelement 30 der Stromwendeeinheit 18 hergestellt wird. Um ein sicheres Aufpressen der Stromwendeeinheit 18 auf das Isoliermittel 40 bei der Fügebewegung zu erlauben, ist zusätzlich ein an dem Isoliermittel 40 anliegender metallischer Ring 56 vorgesehen. Durch die konische Form der Umfangsseite 48 der Leiteraufnahmeeinheit 46 werden die lamellenförmigen Fortsätze 42 der Ankerwelle 14 elastisch radial nach außen gebogen, wobei durch eine durch das Biegen entstehende Rückstellkraft eine kraftschlüssige Verbindung zwischen der Stromwendeeinheit 18 und der Leiteraufnahmeeinheit 46 entsteht.

In Figur 5 ist der Kontaktbereich zwischen der Stromwendeeinheit 18 und der Ankereinheit 12 des Elektromotors 10 in einer perspektivischen Ansicht dargestellt. Zu erkennen sind der Wicklungskopf 20 mit den elektrischen Drähten 24, die an dem Wicklungskopf 20 aufgepresste Leiteraufnahmeeinheit 46 mit der konischen Umfangsseite 48 und den Vertiefungen 50 und die Stromwendeeinheit 18 mit den Kontaktierelementen 30. Die lamellenförmigen Fortsätze 42 greifen jeweils in eine der Vertiefungen 50 ein, in der sie mit einem eingelegten elektrischen Leiter 34 in elektrischem Kontakt sind.

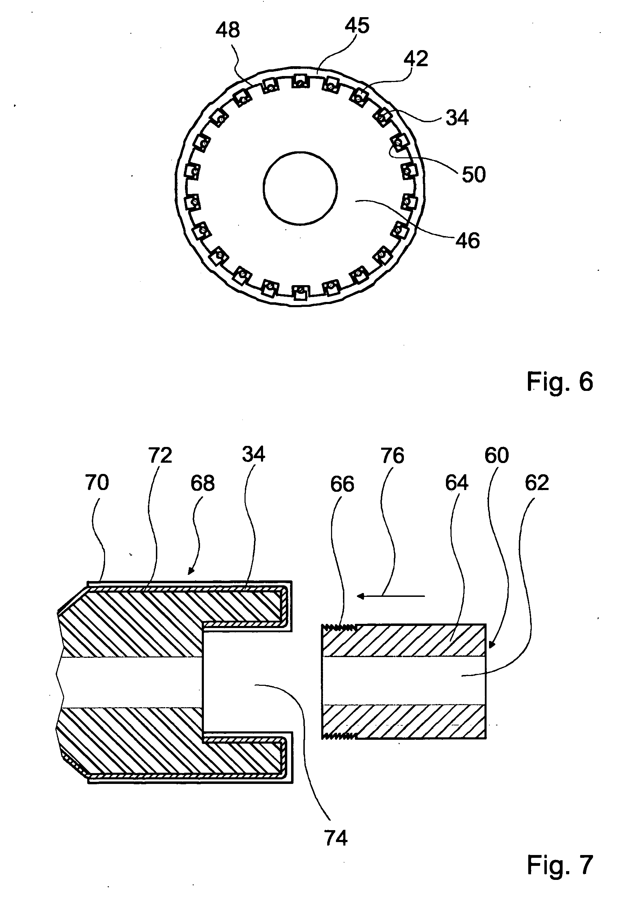

Figur 6 zeigt die Leiteraufnahmeeinheit 46 bei einer hergestellten elektrischen Verbindung mit in den Vertiefungen 50 eingelegten elektrischen Leitern 34, auf welchen die lamellenförmigen Fortsätze 42 aufgepresst angeordnet sind. Zu erkennen ist das Schutzmittel 45, das in Umfangsrichtung der Stromwendeeinheit 18 auf den lamellenförmigen Fortsätzen 42 angeordnet ist.

In Figur 7 ist ein weiteres Beispiel einer Elektromotorkommutierungsvorrichtung dargestellt. Diese weist eine Stromwendeeinheit 60 auf, welche eine zur Durchführung der Ankerwelle 14 vorgesehene Ausnehmung 62 und in Umfangsrichtung mehrere, hintereinander angeordnete elektrisch leitende Kontaktierelemente 64 umfasst, die jeweils mit einem zahnförmigen Abschnitt 66 versehen sind. Außerdem umfasst die Elektromotorkommutierungsvorrichtung eine Leiteraufnahmeeinheit 68. Diese ist von einem ringförmigen Element gebildet, das eine Umfangsseite 70 mit Vertiefungen 72 aufweist, in welche jeweils ein elektrischer Leiter 34 der Ankereinheit 12 eingelegt ist. Die Leiteraufnahmeeinheit 68 umfasst außerdem einen Aufnahmebereich 74 zur Aufnahme der Stromwendeeinheit 60. Bei der Montage des mit dieser alternativen Elektromotorkommutierungsvorrichtung versehenen Elektromotors 10 wird nach dem Bewickeln der Ankereinheit 12 und dem Einlegen der elektrischen Leiter 34 in die Vertiefungen 72 die Stromwendeeinheit 60 in Längsrichtung 76 der Ankerwelle 14 in den Aufnahmebereich 74 hineingesteckt. Bei dieser Fügebewegung wird eine Lackisolation der elektrischen Leiter 34 durch das zahnförmige Profil des Abschnitts 66 abgeschabt, wodurch eine elektrische Verbindung zwischen den Kontaktierelementen 64 und den elektrischen Leitern 34 hergestellt wird.

### Bezugszeichen

- 10: Elektromotor
- 12: Ankereinheit
- 14: Ankerwelle
- 18: Stromwendeeinheit
- 20: Wicklungskopf
- 24: Draht
- 26: Eisenkern
- 28: Wicklungsnut
- 30: Kontaktierelement
- 34: Leiter
- 36: Trägerelement
- 38: Armierungsring
- 40: Isoliermittel
- 42: lamellenförmiger Fortsatz
- 44: zahnförmiger Abschnitt
- 45: Schutzmittel
- 46: Leiteraufnahmeeinheit
- 47: Ausnehmung
- 48: Umfangsseite
- 50: Vertiefung
- 52: Boden
- 56: Ring
- 60: Stromwendeeinheit
- 62: Ausnehmung
- 64: Kontaktierelement
- 66: zahnförmiger Abschnitt
- 68: Leiteraufnahmeeinheit
- 70: Umfangsseite
- 72: Vertiefung
- 74: Aufnahmebereich
- 76: Längsrichtung

## Patentansprüche

1. Elektromotorkommutierungsvorrichtung zur Polumschaltung einer Ankereinheit (12) mit einer Stromwendeeinheit (18), wobei die Stromwendeeinheit (18) dazu vorgesehen ist, eine elektrische Verbindung mit der Ankereinheit (12) durch eine Fügebewegung herzustellen und zumindest ein Kontaktierelement (30) mit einem lamellenförmigen Fortsatz (42) aufweist, das bei einem Betrieb in elektrischem. Kontakt mit zumindest einer Kohlebürste steht, wobei das Kontaktierelement (30) dazu vorgesehen ist, eine elektrische Verbindung mit der Ankereinheit (12) durch ein Stecken der Stromwendeeinheit (18) herzustellen, **dadurch gekennzeichnet, dass** das Kontaktierelement (30) einen zahnförmigen Abschnitt (44) an einer Unterseite des lamellenförmigen Fortsatzes (42) aufweist, der bei der Fügebewegung einen elektrischen Kontakt mit einem elektrischen Leiter (34) der Ankereinheit (12) herstellt.

2. Elektromotorkommutierungsvorrichtung nach Anspruch 1, **gekennzeichnet durch** eine von der Stromwendeeinheit (18, 60) separierbare Leiteraufnahmeeinheit (46, 68), die zur Aufnahme elektrischer Leiter (34) der Ankereinheit (12) vorgesehen ist.

3. Elektromotorkommutierungsvorrichtung nach Anspruch 1, **dadurch gekennzeichnet, dass** das Kontaktierelement (30, 64) dazu vorgesehen ist, bei der Fügebewegung elastisch verformt zu werden.

4. Elektromotorkommutierungsvorrichtung nach Anspruch 3, **gekennzeichnet durch** ein Schutzmittel (45), das bei einer hergestellten elektrischen Verbindung auf dem lamellenförmigen Fortsatz (42) angeordnet ist.

5. Elektromotorkommutierungsvorrichtung nach einem der Ansprüche 1 und 3 bis 4, **dadurch gekennzeichnet, dass** das Kontaktierelement (30) durch einen Stanzvorrang ausgeformt ist.

6. Elektromotorkommutierungsvorrichtung zumindest nach Anspruch 2, **dadurch gekennzeichnet, dass** die Leiteraufnahmeeinheit (46, 68) von einem ringförmigen Element gebildet ist, das eine Umfangsseite (48, 70) aufweist, welche Vertiefungen (50, 72) zum Einlegen der elektrischen Leiter (34) umfasst.

7. Elektromotorkommutierungsvorrichtung zumindest nach Anspruch 2, **dadurch gekennzeichnet, dass** bei einer hergestellten elektrischen Verbindung die Stromwendeeinheit (18, 60) und die Leiteraufnahmeeinheit (46, 68) über eine Pressverbindung verbunden sind.

8. Elektromotorkommutierungsvorrichtung zumindest nach Anspruch 2, **dadurch gekennzeichnet, dass** die Leiteraufnahmeeinheit (46) eine konische Umfangsseite (48) aufweist.

9. Handwerkzeugmaschine mit einer Elektromotorkommutierungsvorrichtung nach einem der vorhergehenden Ansprüche.

10. Verfahren zur Herstellung einer elektrischen Verbindung zwischen einer Elektromotorkommutierungsvorrichtung und einer Ankereinheit (12), bei dem die Ankereinheit (12) mit elektrischen Drähten (24) bewickelt und nachfolgend durch eine Fügebewegung eine elektrische Verbindung zwischen der Ankereinheit (12) und einer Stromwendeeinheit (18) der Elektromotorkommutierungsvorrichtung hergestellt wird, wobei die Stromwendeeinheit (18) zumindest ein Kontaktierelement (30) mit einem lamellenförmigen Fortsatz (42) aufweist, das zumindest bei einem Betrieb in elektrischem Kontakt mit zumindest einer Kohlebürste steht, wobei bei einem Stecken der Stromwendeeinheit (18) das Kontaktierelement (30) die elektrische Verbindung mit der Ankereinheit (12) herstellt, **dadurch gekennzeichnet, dass** ein zahnförmiger Abschnitt (44) an einer Unterseite des lamellenförmigen Fortsatzes (42) des Kontaktierelements (30) einen elektrischen Kontakt mit einem elektrischen Leiter (34) der Ankereinheit (12) herstellt.

## Claims

1. Electric motor commutation device for reversing the polarity of an armature unit (12) with a current-changing unit (18), the current-changing unit (18) being provided for producing an electrical connection with the armature unit (12) by a joining movement and having at least one contact-making element (30) with a lamellar protrusion (42), which contact-making element, during operation, is in electrical contact with at least one carbon brush, the contact-making element (30) being provided for producing an electrical connection with the armature unit (12) by plugging of the current-changing unit (18), **characterized in that** the contact-making element (30) has a tooth-shaped section (44) on a lower side of the lamellar protrusion (42), which tooth-shaped section, during the joining movement, produces an electrical contact with an electrical conductor (34) of the armature unit (12).

2. Electric motor commutation device according to Claim 1, **characterized by** a conductor accommodating unit (46, 68), which can be separated from the current-changing unit (18, 60) and is provided for accommodating electrical conductors (34) of the armature unit (12).

3. Electric motor commutation device according to Claim 1, **characterized in that** the contact-making element (30, 64) is provided for being elastically deformed during the joining movement.

4. Electric motor commutation device according to Claim 3, **characterized by** a protection means (45), which is arranged on the lamellar protrusion (42) when an electrical connection has been produced.

5. Electric motor commutation device according to one of Claims 1 and 3 to 4, **characterized in that** the contact-making element (30) is shaped by a stamping operation.

6. Electric motor commutation device at least according to Claim 2, **characterized in that** the conductor accommodating unit (46, 68) is formed by an annular element, which has a circumferential side (48, 70), which comprises depressions (50, 72) for inserting the electrical conductors (34).

7. Electric motor commutation device at least according to Claim 2, **characterized in that**, when an electrical connection has been produced, the current-changing unit (18, 60) and the conductor accommodating unit (46, 68) are connected to one another via a compression joint.

8. Electric motor commutation device at least according to Claim 2, **characterized in that** the conductor accommodating unit (46) has a conical circumferential side (48).

9. Handheld machine tool with an electric motor commutation device according to one of the preceding claims.

10. Method for producing an electrical connection between an electric motor commutation device and an armature unit (12), in which electrical wires (24) are wound around the armature unit (12) and then an electrical connection is produced between the armature unit (12) and a current-changing unit (18) of the electric motor commutation device by a joining movement, the current-changing unit (18) having at least one contact-making element (30) with a lamellar protrusion (42), which contact-making element is in electrical contact with at least one carbon brush, at least during one operation, with the contact-making element (30) producing the electrical connection with the armature unit (12) when the current-changing unit (18) is plugged, **characterized in that** a tooth-shaped section (44) on a lower side of the lamellar protrusion (42) of the contact-making element (30) produces an electrical contact with an electrical conductor (34) of the armature unit (12).

## Revendications

1. Dispositif de commutation pour moteur électrique pour la permutation des pôles d'une unité d'induit (12) munie d'une unité de collecte de courant (18), l'unité de collecte de courant (18) étant prévue pour établir une liaison électrique avec l'unité d'induit (12) par un mouvement d'assemblage et présentant au moins un élément de mise en contact (30) muni d'un prolongement (42) en forme de lamelle qui, lors d'un fonctionnement, se trouve en contact électrique avec au moins un balai en charbon, l'élément de mise en contact (30) étant prévu pour établir une liaison électrique avec l'unité d'induit (12) par un enfichage de l'unité de commutation de courant (18), **caractérisé en ce que** l'élément de mise en contact (30) présente une section en forme de dent (44) sur un côté inférieur du prolongement (42) en forme de lamelle, laquelle établit un contact électrique avec un conducteur électrique (34) de l'unité d'induit (12) lors du mouvement d'assemblage.

2. Dispositif de commutation pour moteur électrique selon la revendication 1, **caractérisé par** une unité d'accueil de conducteur (46, 68) pouvant être séparée de l'unité de collecte de courant (18, 60), laquelle est prévue pour accueillir le conducteur électrique (34) de l'unité d'induit (12).

3. Dispositif de commutation pour moteur électrique selon la revendication 1, **caractérisé en ce que** l'élément de mise en contact (30, 64) est prévu pour subir une déformation élastique lors du mouvement d'assemblage.

4. Dispositif de commutation pour moteur électrique selon la revendication 3, **caractérisé par** un moyen de protection (45), qui est disposé sur le prolongement (42) en forme de lamelle lorsqu'une liaison électrique est établie.

5. Dispositif de commutation pour moteur électrique selon l'une des revendications 1, 3 et 4, **caractérisé en ce que** l'élément de mise en contact (30) est façonné par une opération de poinçonnage.

6. Dispositif de commutation pour moteur électrique au moins selon la revendication 2, **caractérisé en ce que** l'unité d'accueil de conducteur (46, 68) est formée par un élément annulaire qui présente un côté pourtour (48, 70), lequel comprend des enfoncements (50, 72) pour y insérer le conducteur électrique (34).

7. Dispositif de commutation pour moteur électrique au moins selon la revendication 2, **caractérisé en ce que** lorsqu'une liaison électrique est établie, l'unité de collecte de courant (18, 60) et l'unité d'accueil de conducteur (46, 68) sont reliées par le biais d'un assemblage à ajustement serré.

8. Dispositif de commutation pour moteur électrique au moins selon la revendication 2, **caractérisé en ce que** l'unité d'accueil de conducteur (46) présente un côté pourtour (48) conique.

9. Machine électroportative équipée d'un dispositif de commutation pour moteur électrique selon l'une des revendications précédentes.

10. Procédé pour établir une liaison électrique entre un dispositif de commutation pour moteur électrique et une unité d'induit (12), selon lequel l'unité d'induit (12) est enroulée avec des fils métalliques électriques (24) et une liaison électrique entre l'unité d'induit (12) et une unité de collecte de courant (18) du dispositif de commutation pour moteur électrique est ensuite établie par un mouvement d'assemblage, l'unité de collecte de courant (18) présentant au moins un élément de mise en contact (30) muni d'un prolongement (42) en forme de lamelle qui, au moins lors d'un fonctionnement, se trouve en contact électrique avec au moins un balai en charbon, l'élément de mise en contact (30) établissant une liaison électrique avec l'unité d'induit (12) lors d'un enfichage de l'unité de collecte de courant (18), **caractérisé en ce qu'**une section en forme de dent (44) sur un côté inférieur du prolongement (42) en forme de lamelle de l'élément de mise en contact (30) établit un contact électrique avec un conducteur électrique (34) de l'unité d'induit (12).
